# EUROPÄISCHE PATENTANMELDUNG

(11) **EP 4 155 846 A1**
(43) Veröffentlichungstag der Anmeldung: **29.03.2023**
(21) Anmeldenummer: 22191474.0
(22) Anmeldetag: 22.08.2022
(51) Int. Cl.: G05B 19/042

(54) **VERBINDUNGSELEMENT ZUM HERSTELLEN EINER KABELGEBUNDENEN VERBINDUNG ZWISCHEN EINER ERSTEN UND ZWEITEN EINHEIT**

(30) Priorität: 27.09.2021 DE 102021124886
(71) Anmelder: Turck Holding GmbH, 58553 Halver (DE)
(72) Erfinder: Schwagmann, Hermann, 32760 Detmold (DE); Kriegel, Thomas, 58515 Lüdenscheid (DE); Mantei, Dirk, 32760 Detmold (DE)
(74) Vertreter: DTS Patent- und Rechtsanwälte Schnekenbühl und Partner mbB

(57) **Zusammenfassung**

Die Erfindung betrifft ein Verbindungselement zum Herstellen einer kabelgebundenen Verbindung zwischen einer ersten Einheit und einer zweiten Einheit, umfassend ein Diagnosemodul; wobei das Diagnosemodul umfasst: Eine Empfangsschnittstelle, die zum Empfangen von Daten von der ersten Einheit über eine kabelgebundene datentechnische Verbindung eingerichtet ist, ein Speichermodul, das zum Speichern der von der ersten Einheit empfangenen Daten eingerichtet ist, und eine Ausleseschnittstelle, die zum Ausgeben der von dem Speichermodul gespeicherten Daten über eine kabellose datentechnische Verbindung eingerichtet ist. Die Erfindung betrifft ferner eine Einheit mit einem Verbindungselement, das unmittelbar mit der Einheit verbunden ist sowie ein System mit einer ersten Einheit und einer zweiten Einheit. Die Erfindung betrifft schließlich auch ein Verfahren zum Herstellen einer kabelgebundenen Verbindung.

## Beschreibung

Die Erfindung betrifft ein Verbindungselement zum Herstellen einer kabelgebundenen Verbindung zwischen einer ersten und einer zweiten Einheit. Sie betrifft ferner eine Einheit und ein System mit einem Verbindungselement sowie ein Verfahren.

In Feldgeräten gespeicherte Daten zur Konfiguration werden bei einem Ersatz eines Feldgerätes vorteilhafterweise für das neue Gerät übernommen. In der DE 10 2011 089 346 A1 wird hierzu ein Verfahren zum Betreiben eines Feldgerätes der Prozessautomatisierungstechnik beschrieben, um die Grundfunktion des Feldgerätes zur Verfügung zu stellen, selbst wenn die Energieversorgung des Feldgerätes beispielsweise über den Feldbus ausgefallen sein sollte.

Bei einem Totalausfall des Feldgerätes kann es hingegen zeitaufwendig sein, anschließend den Fehler zu suchen, der zum Ausfall des Feldgeräts geführt hat. Dies können etwa Umwelteinflüsse wie Vibration, Feuer, Druck oder ähnliches sein, oder auch Bedienfehler wie beispielsweise eine Unterbrechung eines Updates.

Microcontroller-basierte elektronische Schaltungen, wie sie in Feldgeräten eingesetzt werden, etwa in einer Feldbusstation mit Kommunikationsschnittstellen und Ein-/Ausgängen oder einer Sensoreinheit oder in Infrastrukturkomponenten wie Switche, sind vielen schädigenden Umweltbedingungen ausgesetzt und/oder können durch eine Falschbedienung zerstört werden. Diese elektronischen Schaltungen sind durch geeignete Maßnahmen gegen derartige Umwelt- und Verwendungsbedingungen geschützt. Dazu gehören mechanische und konstruktive Lösungen wie Gehäuse, Dichtungen, Verguss, Lackierungen und Kunstoffkapselungen, die diese Schaltungen umgeben und gegen mechanische Einflüsse wie Schocks oder Vibrationen schützen sowie ein Eindringen von Wasser oder anderen schädlichen Stoffen verhindern.

Weiter werden technische Lösungen eingesetzt, die beispielsweise zerstörerische Spannungsspitzen, Überlastungen, Überhitzungen, falsche Benutzung oder Verwendung in bestimmten Grenzen verhindern sollen. Alle Belastungen, die darüber hinaus auftreten können, zerstören die elektronische Schaltung oder ihre Bauteile kurz- oder langfristig. Diese werden im Normalfall für den Verwender des Geräts anhand von Bedienungsanleitungen und Normeninformationen bekannt gemacht, um sicher zu stellen, dass diese elektronischen Schaltungen nicht außerhalb der genannten Belastungsgrenzen verwendet werden oder eine anderweitige Falschverwendung zur Zerstörung führt. Eine falsche Verwendung könnte beispielsweise eine zu hohe Umgebungstemperatur, Betrieb unter Wasser, eine zu hohe Strom- oder Spannungsbelastung oder Vibrationsbelastung sein. Eine weitere Fehlerquelle ist eine Unterbrechung der Energieversorgung während kritischer Betriebszustände eines Gerätes, das gerade beispielsweise ein Software-Update erfährt.

Trotz aller Schutzmaßnahmen, Hinweise und Einschränkungen der Bedienung tritt unter Umständen eine Zerstörung elektronischer Schaltungen und Geräte auf. Nach der Zerstörung dieser Schaltungen oder Geräte sind sie im Zweifel nicht mehr betriebsbereit.

Aus der EP 3 086 232 A2 ist ein Datenwiederherstellungsverfahren mittels einer Kabelanordnung mit Speicherfunktion bekannt. Hier ist vorgesehen, dass auf ein Backup-Signal hin eine Datensicherung für ein elektronisches Gerät auf einem Flash-Speichermodul der Kabelanordnung ausgeführt wird. Auf ein Wiederherstellungssignal werden Daten von dem Flash-Speichermodul der Kabelanordnung an das elektronische Gerät übertragen.

Aus der EP 2 220 564 B1 ist ein USB-Kabel zur Bereitstellung elektrischer Energie von einer Stromquelle auf ein elektronisches Mobilgerät bekannt. Das Kabel weist ein Speichermodul auf. Es können Daten eines Mobilgeräts gesichert werden. Zudem kann eine Wiederherstellung der Daten auf dem Mobilgerät oder eine Überragung an ein anderes Mobilgerät ausgeführt werden.

Aus der US 2017/0162929 A1 ist ein Ladekabel für elektronische Geräte bekannt. Das Ladekabel umfasst ein Modul mit einer Antenne zur kabellosen Kommunikation mit einem oder mehreren elektronischen Geräten. Es wird eine Datensicherung eines gekoppelten Geräts durchgeführt und auf dem Modul des Ladekabels gespeichert.

Aufgabe der vorliegenden Erfindung war es, die Fehlersuche auch bei einem Totalausfall einer Einheit einfacher möglich zu machen.

Diese Aufgabe wird durch ein Verbindungselement beziehungsweise ein Verfahren der eingangs genannten Art mit den Merkmalen der unabhängigen Ansprüche gelöst. Vorteilhafte Ausgestaltungen und Weiterbildungen der Erfindung sind in den abhängigen Ansprüchen angegeben.

Das Verbindungselement zum Herstellen einer kabelgebundenen Verbindung zwischen einer ersten Einheit und einer zweiten Einheit umfasst ein Diagnosemodul. Das Diagnosemodul wiederum umfasst eine Empfangsschnittstelle, die zum Empfangen von Daten von der ersten Einheit über eine kabelgebundene datentechnische Verbindung eingerichtet ist, ein Speichermodul, das zum Speichern der von der ersten Einheit empfangenen Daten eingerichtet ist, und eine Ausleseschnittstelle, die zum Ausgeben der von dem Speichermodul gespeicherten Daten über eine kabellose datentechnische Verbindung eingerichtet ist.

Ein grundlegendes Konzept der Erfindung besteht darin, dass von der ersten Einheit bereitgestellte Daten in einem Speichermodul des Verbindungselements abgelegt werden und von dort über die Auslegeschnittstelle kabellos ausgelesen werden können.

Ferner besteht eine grundlegende Idee der Erfindung darin, relevante Daten betreffend die erste Einheit in räumlicher Nähe und direkt der ersten Einheit zugeordnet zu speichern und diese besonders einfach auslesbar vorzuhalten, insbesondere bei einem eventuellen Ausfall der ersten Einheit.

Ferner kann so erreicht werden, dass die gesicherten Daten betreffend die erste Einheit räumlich naheliegend und an einem sehr einfach und eindeutig zuordenbaren Ort abgelegt werden. Das Verbindungselement ist an die erste Einheit angeschlossen und daher - vor allem in einer größeren Anlage mit vielen Komponenten - besonders einfach und intuitiv zu lokalisieren; dadurch kann auch das Diagnosemodul leicht aufgefunden und ausgelesen werden.

Ferner können Ausfallzeiten verringert werden, insbesondere wenn ein Gerätetausch in der Anlage nötig ist.

Die Erfindung ermöglicht ferner den Einsatz des Diagnosemoduls mit verschiedenen Einheiten, die hierfür nicht unbedingt umgerüstet werden müssen; dies spart Kosten gegenüber anderen Systemen und Verfahren, die hochspezialisierte Hardware verlangen.

Zudem können Probleme beim Betrieb der ersten Einheit sowie dadurch entstehende Beeinträchtigungen oder gar Beschädigungen anhand der gespeicherten Daten identifiziert und besonders einfach behoben werden. Hierdurch können Ausfälle reduziert werden und die mögliche Betriebsdauer von Geräten kann verlängert werden.

Gegebenenfalls können dabei auch sicherheitsrelevante Probleme frühzeitig erkannt und behoben werden.

Insbesondere kann das Diagnosemodul dazu eingerichtet sein, dass die Daten auch dann ausgebbar beziehungsweise auslesbar sind, wenn keine datentechnische Verbindung zwischen der ersten und zweiten Einheit und/oder keine datentechnische Verbindung zwischen dem Diagnosemodul und der ersten Einheit besteht.

Ferner kann das Diagnosemodul dazu eingerichtet sein, dass die Daten auch dann ausgebbar beziehungsweise auslesbar sind, wenn das Diagnosemodul nicht mit elektrischer Energie von der ersten oder zweiten Einheit versorgt wird, insbesondere auch dann wenn das Diagnosemodul über keinen eigenen Energiespeicher verfügt. Insbesondere erfolgt dann ein passives Auslesen der Daten durch eine externe Einheit, etwa ein Auslesegerät, das bei einem Auslesevorgang die seitens des Diagnosemoduls nötige Energie bereitstellt, etwa induktiv, wie beispielsweise bei RFID-Tags.

Bei einer ersten Ausbildung ist das Verbindungselement dazu eingerichtet, eine datentechnische Verbindung und/oder eine Verbindung zur Übertragung elektrischer Energie zwischen der ersten Einheit und der zweiten Einheit herzustellen.

Insbesondere ist vorgesehen, dass das Verbindungselement eine Punkt-zu-Punkt-Verbindung zwischen der ersten und zweiten Einheit herstellt.

Dabei ist das Verbindungselement so gebildet, dass es zum Herstellen der kabelgebundenen Verbindung zwischen der ersten und der zweiten Einheit geeignet ist. Das Verbindungselement kann dazu beispielsweise ein Kabel und/oder einen elektrischen Steckverbinder umfassen.

Die kabelgebundene Verbindung zwischen der ersten und der zweiten Einheit ist beispielsweise als datentechnische Verbindung ausgebildet und/oder erlaubt eine Übertragung elektrischer Leistung, etwa zum Aufladen einer Batterie bei einem Ladekabel, zum Betreiben eines Aktors oder Sensors oder zum Bereitstellen einer Betriebsspannung für eine andere Einheit, beispielsweise eine Recheneinheit. Dabei kann die kabelgebundene Verbindung auch so erfolgen, dass auf an sich bekannte Weise sowohl Daten als auch elektrische Leistung übertragen werden können.

Beispielsweise kann eine IO-Link-Verbindung zwischen der ersten und zweiten Einheit über das Verbindungselement hergestellt werden.

Insbesondere handelt es sich nicht um eine USB-Verbindung.

Die erste Einheit kann auf verschiedene Weisen ausgebildet sein, insbesondere als elektrische Einheit. Diese elektrische Einheit kann beispielsweise ein Feldgerät sein oder ein solches umfassen.

Ein Feldgerät kann etwa eine Feldbusstation mit Kommunikationsschnittstellen und Ein-/Ausgängen, eine Sensoreinheit oder eine Infrastrukturkomponente wie ein Switch sein. Ein Feldgerät oder englisch "*field device*" kann ferner so ausgebildet sein, dass es in direkter Beziehung mit einem Produktionsprozess steht, etwa einer Produktionsanlage. Beispiele hierfür sind etwa I/O-Module, modulare I/O-Stationen sowie Steuerungen (SPS/PLC). Das Feldgerät kann insbesondere als Aktor und/oder Sensor ausgebildet sein beziehungsweise einen solchen umfassen.

Die erste Einheit kann ferner eine Telekommunikationseinheit umfassen. Bei einer weiteren Ausbildung kann jedoch vorgesehen sein, dass es sich bei der ersten Einheit gerade nicht um ein Mobiltelefon oder ein anderes Telekommunikationsgerät handelt.

Auch die zweite Einheit kann auf verschiedene Weisen gebildet sein, die an sich bekannt sind. Sie kann etwa eine IO-Master-Einheit umfassen, einen Switch oder eine Spannungsversorgung, etwa mit einem Ladegerät oder einem Gerät zum Bereitstellen einer Betriebsspannung.

Die Empfangsschnittstelle des Diagnosemoduls ist dazu ausgebildet, Daten von der ersten Einheit über eine kabelgebundene datentechnische Verbindung zu empfangen. Auch diese datentechnische Verbindung kann - ähnlich wie eine eventuell über das Verbindungselement herstellbare datentechnische Verbindung zwischen der ersten und der zweiten Einheit - auf an sich bekannte Weise hergestellt beziehungsweise betrieben werden. Beispielsweise kann über das Verbindungselement eine kabelgebundene Verbindung zwischen der Empfangsschnittstelle des Diagnosemoduls des Verbindungselements und einer entsprechenden Schnittstelle der ersten Einheit herstellbar sein.

Die Empfangsschnittstelle der ersten Einheit kann etwa eine elektronische, insbesondere eine mikroelektronische Schaltung umfassen.

Um die kabelgebundene Datenübertragung, insbesondere über eine kabelgebundene datentechnische Verbindung, zwischen der ersten Einheit und der Empfangsschnittstelle des Diagnosemoduls zu implementieren, können verschiedene Technologien und Protokolle genutzt werden. Beispielsweise können Single Pair Ethernet (SPE) bzw. Advanced Physical Layer (APL), Ethernet-basierende Feldbusprotokolle, wie z. B. Profinet, Ethernet/IP, Modbus, IO-Link, Powerline Communication (PLC) / Powerline / PowerLAN insbesondere nach IEEE-1901-FFT oder IEEE-1901-wavelet oder ITU G.hn, oder USB genutzt werden. Auch Kombinationen verschiedener Protokolle können je nach dem Kontext des Einsatzes vorgesehen sein.

Bei einer Ausbildung der Erfindung ist das Verbindungselement nicht für eine Verbindung über USB geeignet.

Es kann vorgesehen sein, dass zum Empfang von Daten von der ersten Einheit durch die Empfangsschnittstelle des Diagnosemoduls eine verschlüsselte Datenverbindung herstellbar ist, um ein besonders vorteilhaftes Niveau an Sicherheit zu ermöglichen.

Auch eine Versorgung des Diagnosemoduls mit elektrischer Energie kann auf verschiedene, an sich bekannte Weisen erfolgen. Wenn über das Verbindungselement, etwa ein elektrisches Kabel, Daten und Energie übertragen werden, dann kann auch das Diagnosemodul aus den energieübertragenden Adern des Kabels versorgt werden. Dies kann beispielsweise bei folgenden Technologien/Protokolle der Fall sein: *Power over Data Lines* (PoDL), *Power over Ethernet* (PoE), IO-Link, *Powerline Communication* (PLC) / Powerline / PowerLAN insbesondere nach IEEE-1901-FFT oder IEEE-1901-wavelet oder ITU G.hn, sowie USB.

Ferner kann das Diagnosemodul über eine separate Zuleitung mit Energie versorgt werden.

Ferner kann das Diagnosemodul mit Hilfe einer Batterie, eines Akkumulators oder eines Superkondensators mit elektrischer Energie versorgt werden.

Ferner kann eine Energieversorgung auch kontaktlos erfolgen, etwa durch eine RFID/NFC-Funktionalität das Diagnosemoduls.

Das von dem Verbindungselement umfasste Diagnosemodul kann ferner ein Datenverarbeitungsmodul umfassen. Dieses stellt insbesondere die nötigen Steuerfunktionalitäten bereit, um die Empfangsschnittstelle und die Ausleseschnittstelle sowie das Speichermodul zu betreiben.

Ferner kann mittels des Datenverarbeitungsmoduls eine Datenverarbeitung der empfangenen Daten von der ersten Einheit erfolgen, etwa eine Filterung, eine Kompression und/oder Dekompression, eine Konvertierung in ein bestimmtes Datenformat oder eine andere Datenverarbeitung, beispielsweise ein Bestimmen eines Fehlercodes anhand einer Nachschlagetabelle.

Die empfangenen Daten können über eine verschlüsselte Verbindung zwischen der ersten Einheit und dem Diagnosmodul empfangen werden.

Ferner kann bei dem Diagnosemodul eine Verschlüsselung der zu speichernden oder auszugebenden Daten mittels des Datenverarbeitungsmoduls erfolgen, um den unbefugten Zugriff auf die Daten zu verhindern.

Auch die Ausleseschnittstelle kann auf verschiedene Weisen ausgebildet sein. Entscheidend ist, dass sie ein kabelloses Ausgeben von Daten erlaubt, die auf dem Speichermodul gespeichert sind. Die Ausleseschnittstelle ist gegebenenfalls dazu eingerichtet, dass die auf dem Speichermodul gespeicherten Daten oder eine Teilmenge davon bei einem Auslesevorgang bereitgestellt werden können.

Das Ausgeben kann etwa aktiv erfolgen, wobei das Diagnosemodul die betreffenden Daten aktiv sendet, etwa an ein Auslesegerät, das zum Auslesen der Daten eingerichtet ist. Das Ausgeben der betreffenden Daten durch das Diagnosemodul kann etwa auf ein Auslese- oder Anforderungssignal hin erfolgen. So kann zum Beispiel ein Auslesegerät dazu eingerichtet sein, bei einem Auslesevorgang ein Auslese- oder Anforderungssignal an das Diagnosemodul zu übertragen und die dann ausgegebenen Daten zu empfangen.

Das Ausgeben der betreffenden Daten durch das Diagnosemodul kann ferner passiv erfolgen, etwa wenn das Diagnosemodul über keine eigene Energieversorgung verfügt, wenn eine solche Energieversorgung nicht funktioniert oder wenn aus anderen Gründen keine aktive Bereitstellung der Daten erfolgen kann: Beim passiven Ausgeben wird insbesondere ein Auslesegerät verwendet, welches ohne eigene Energieversorgung des Diagnosemoduls oder ohne eigenständigen Betrieb des Diagnosemoduls den Auslesevorgang steuert, etwa mittels Nahfeldkommunikation; dabei kann dem Diagnosemodul und insbesondere der Ausleseschnittstelle auch eine zum Betrieb notwendige Energie von außen bereitgestellt werden, wie etwa beim Auslesen eines RFID-/NFC-Tags.

Beispielsweise kann das Speichermodul mit einem Tag verbunden oder in einen solchen integriert sein, insbesondere in einen RFID-/NFC-Tag. Eine solche Schnittstelle zur kabellosen Datenübertragung kann unidirektional ausgebildet sein und etwa ein kabelloses Ausgeben der im Diagnosemodul gespeicherten Daten erlauben, oder sie kann bidirektionale Kommunikation erlauben, etwa zum Konfigurieren des Ausgabevorgangs oder zum Schreiben auf das Speichermodul.

Bei einer bidirektionalen Kommunikation zwischen dem Diagnosemodul und einer externen Einheit zum Ausgeben der Daten des Diagnosemoduls kann etwa ein Anforderungssignal an das Diagnosemodul übertragen werden, wobei das Diagnosemodul anschließend Daten in Abhängigkeit von dem Anforderungssignal bereitstellt. Anhand eines solchen Anforderungssignals kann das Diagnosemodul beispielsweise bestimmen, ob eine externe Einheit zum Zugriff auf die Daten berechtigt ist und/oder welche der gespeicherten Daten bereitgestellt werden sollen.

Das Speichermodul kann zudem auf unterschiedliche Weisen ausgebildet sein. Es ist dazu geeignet, die relevanten Daten, die von der ersten Einheit empfangen und gegebenenfalls von einem Datenverarbeitungsmodul verarbeitet wurden, zu speichern und zum Ausgeben bereitzuhalten. Es ist insbesondere ein nicht-flüchtiger Datenspeicher vorgesehen, sodass die gespeicherten Daten auch beim Ausfall anderer Komponenten und insbesondere bei einem Ausfall der Spannungsversorgung des Diagnosemoduls erhalten bleiben.

Bei einer weiteren Ausbildung umfassen die von der ersten Einheit empfangenen Daten Betriebsdaten und/oder Diagnosedaten.

Betriebsdaten können dabei zum Beispiel Parameter im Zusammenhang mit dem Betrieb der ersten Einheit umfassen, etwa eine Konfiguration des Geräts, Rezepte, Verwendungsinformationen, Betriebsstunden oder eine Anzahl einzelner Nutzungen, Wartungsinformationen und anderes.

Diagnosedaten umfassen insbesondere solche Parameter, die für das Bestimmen einer Ausfall- oder Schadenswahrscheinlichkeit relevant sind, etwa die Anzahl der ermittelten Überspannungen während des Betriebs, gemessene Umgebungswerte wie Temperatur, Feuchtigkeit oder Druck. Als Betrieb- oder Diagnosedaten kommen zudem Zustandsinformationen infrage, etwa "Befinde mich in der Updatefunktion der Betriebssoftware", "Umgebungstemperatur zu hoch" oder "Spannungsspitze detektiert".

Insbesondere können die Diagnosedaten als eine Teilmenge der Betriebsdaten verstanden werden.

Die Diagnosedaten können ferner Ausfallinformationen umfassen beziehungsweise aus diesen gebildet sein. Ausfallinformationen in diesem Sinne können solche Informationen und Daten sein, die im Zusammenhang mit einem Ausfalls oder eine Störung der ersten Einheit erfasst werden, etwa in einem zeitlichen Zusammenhang vor einem Ausfall oder vor und/oder während einer Störung.

Das Speichermodul kann als Ringspeicher betrieben werden, bei dem eine bestimmte Datenmenge gespeichert wird und, wenn ein bestimmtes Speichervolumen erreicht ist, nach einem Zeitintervall oder nach Eintritt eines definierten Ereignisses die ältesten Daten überschrieben werden. So können stets aktuelle Daten bis in eine definierte Vergangenheit hinein bereitgestellt werden. Hierdurch können nach einem Ausfall der ersten Einheit, bei dem auch die Bereitstellung der Daten zum Diagnosemodul beendet wird, die Betriebsdaten für ein definiertes Zeitintervall vor dem Ausfall bereitgestellt werden. Dies erleichtert die Diagnose und Erkennung eines Problems.

Zu den empfangenen und im Speichermodul gespeicherten Daten können etwa zählen: Eine Datenüberragungsrate oder ein Volumen der über eine datentechnische Verbindung übertragenen Daten, eine Rechenleistung, eine Geschwindigkeit oder Beschleunigung, eine Kraft, elektrische Parameter wie Spannung, Strom und Widerstand, eine elektrische oder magnetische Feldstärke, eine Temperatur, ein Feuchtigkeitswert, eine Beschleunigung und/oder ein Druck.

Es kann ein Schwellenwert für einen Parameter definiert sein und der Wert des Parameters wird nur dann an das Diagnosemodul übertragen oder nur dann von diesem gespeichert, wenn der Wert den Schwellenwert über- beziehungsweise unterschreitet. Zum Beispiel kann damit dokumentiert werden, dass ein Parameter einen kritischen Bereich erreicht, in dem etwa eine erhöhte Ausfallwahrscheinlichkeit auftritt oder kein sicherer Betrieb der ersten Einheit möglich ist. Diagnosedaten können dann dazu geeignet sein, eine Ursache oder eine wahrscheinliche Ursache für einen Ausfall oder eine Fehlfunktion der ersten Einheit festzustellen.

Die als drahtlose Schnittstelle ausgebildete Ausleseschnittstelle, über die die Daten aus dem Speichermodul auslesbar sind, ist bevorzugt als eigenes Bauteil ausgebildet und mit dem Speichermodul verbunden. Hierüber ist es möglich, die Daten im Speichermodul auch dann auszulesen, wenn die erste Einheit nicht mehr ansprechbar ist. Besonders bevorzugt ist die Ausleseschnittstelle, über die die Daten aus dem Speichermodul auslesbar sind, integral mit dem Speichermodul ausgebildet.

Durch die Ergänzung einer ersten Einheit durch ein damit verbundenes Speichermodul, das bevorzugt auch als passiver NFC-Tag ansprechbar ist, können die Daten, die auf dem Speichermodul im Betrieb gespeichert worden sind, unabhängig vom Zustand der restlichen Komponenten ausgelesen. Durch Auswertung kann ermittelt werden, was zum (Total-)Ausfall der ersten Einheit, etwa eines Feldgeräts, geführt hat. Informationen, die auf diesem Speichermodul hinterlegt worden sind, können so *"post-mortem"* ausgelesen werden. Somit ist es möglich, über eine ansonsten nicht mehr betriebsbereite Schaltung (oder ein Gerät) noch beispielsweise über einen von außen herangeführten RFID-Reader Informationen zu gewinnen.

Speichermodule können oftmals auch aus einer zerstörten Schaltung herausgelöst werden und in funktionierenden elektronischen Schaltungen oder Systemen eingesetzt oder angesprochen werden. Dadurch werden die wertvollen Informationen wieder verfügbar. Dies ist aber aufwendiger als das Auslesen der Daten über die drahtlose Schnittstelle, insbesondere wenn die Module beispielsweise vergossen oder lackiert beziehungsweise anderweitig nicht leicht zugänglich sind oder nicht zerstörungsfrei entfernt werden können - gegebenenfalls nur durch thermische Behandlung oder chemische Freisetzung. Elektronische Schaltungen und Geräte können somit trotz der nicht mehr möglichen Inbetriebnahme "*post mortem"* analysiert werden. Erkenntnisse darüber können als Nachweis einer Falschbehandlung dienen und Gewährleistungs- oder Schadensersatzansprüche vermeiden oder wertvolle Informationen über den Zustand des Geräts liefern, um eine Fehlerbehebung eines Gerätetyps zu vereinfachen.

Bei einer Ausbildung ist das Speichermodul eingerichtet, um als passiver RFID-Tag ansprechbar zu sein. Einer Microcontroller-basierten elektronischen Schaltung wird damit insbesondere ein mit dem Microcontroller verbundenes Speichermodul hinzugefügt, das auch als passiver RFID-Tag ansprechbar ist. Es ist ebenfalls möglich, einen RFID-Tag oder einen NFC-Tag einzusetzen. Bevorzugt wird eine Kombination von mehreren Tags genutzt, um die Redundanz zu erhöhen. Es kann sich dabei um mehrere baugleiche Tags handeln oder um mehrere Tags unterschiedlicher Bauarten und/oder Technologien, d.h. RFID-Tag, UHF-RFID-Tag, HF-RFID-Tag oder NFC-Tag in Kombination beziehungsweise Tags unterschiedlicher Speicherkapazität in Kombination. Hierdurch ist es auch möglich, unterschiedliche Inhalte auf die unterschiedlichen Speicher der einzelnen Tags zu speichern und damit über unterschiedliche Tags und deren drahtlose Schnittstellen wieder abzurufen.

Über diesen RFID-Tag können auch vor einer Havarie der ersten Einheit Informationen über die drahtlose Schnittstelle ausgelesen werden und es ist bevorzugt auch möglich, Informationen über die drahtlose Schnittstelle auf das Speichermodul des Diagnosemoduls zu schreiben. Damit können beispielsweise Wartungs- oder Inspektionsdaten auf dem Speichermodul abgelegt werden oder ältere Daten auch gelöscht werden.

Bevorzugt werden Tags eingesetzt, die zusätzlich zur drahtlosen Schnittstelle eine Schnittstelle zum Microcontroller aufweisen. Der RFID-Tag mit dem Speichermodul ist damit der Datenträger für die geloggten Daten.

Weiterhin bevorzugt ist eine elektrische Einheit vorgesehen, bei der das Speichermodul einen Transponder, vorzugsweise gemäß dem NFC- und/oder dem RFID-Standard, aufweist.

Die Near Field Communication (dt. Nahfeldkommunikation, abgekürzt NFC) ist ein auf der RFID-Technik basierender internationaler Übertragungsstandard zum kontaktlosen Austausch von Daten per elektromagnetischer Induktion mittels loser gekoppelter Spulen über kurze Strecken von wenigen Zentimetern und einer Datenübertragungsrate von maximal 424 kBit/s.

RFID (englisch *radio-frequency identification*, "Identifizierung mit Hilfe elektromagnetischer Wellen") bezeichnet eine Technologie für Sender-Empfänger-Systeme zum automatischen und berührungslosen Identifizieren und Lokalisieren von Objekten und Lebewesen mit Radiowellen.

Ein RFID-System besteht in der Regel aus einem Transponder (umgangssprachlich auch Funketikett genannt), der sich am oder im Gegenstand, hier also bevorzugt dem Speichermodul, befindet und einen kennzeichnenden Code enthält, sowie einem Lesegerät zum Auslesen dieser Kennung. Bei einem solchen Auslesevorgang wird die Kennung vom Transponder des RFID-Systems ausgegeben und von dem Lesegerät empfangen.

Es besteht die Möglichkeit, RFID-Transponder über ein spezielles Druckverfahren stabiler Schaltungen aus Polymeren herzustellen.

Die Kopplung geschieht bevorzugt durch vom Lesegerät erzeugte magnetische Wechselfelder in geringer Reichweite oder durch hochfrequente Radiowellen. Damit werden bevorzugt nicht nur Daten übertragen, sondern auch der Transponder mit Energie versorgt.

Das Auslesegerät enthält bevorzugt eine Software (ein Mikroprogramm), die den eigentlichen Ausleseprozess steuert, und besonders bevorzugt auch eine RFID-Middleware mit Schnittstellen zu weiteren EDV-Systemen und Datenbanken.

Weiterhin bevorzugt ist ein Verbindungselement vorgesehen, bei dem das Speichermodul und/ oder der Microcontroller technisch nicht zugänglich eingebaut sind/ ist. Dadurch können die Baumodule vor Umwelteinflüssen und Beschädigungen geschützt werden.

Das Diagnosemodul kann in ein Gehäuse so eingegossen sein, dass es wasserdicht gegenüber der Umwelt abgeschlossen ist. Ein solches Gehäuse kann das Diagnosemodul umschließen.

Bei einer Weiterbildung umfassen die von der ersten Einheit empfangenen Daten Konfigurationsdaten für die erste Einheit.

Die Konfigurationsdaten können in der empfangenen Form gespeichert werden. Sie können ferner gegebenenfalls mittels eines Datenverarbeitungsmoduls verarbeitet werden, etwa um sie zu komprimieren oder zu verschlüsseln.

Dabei kann das Verbindungselement dazu eingerichtet sein, auf ein Wiederherstellungssignal hin die Konfigurationsdaten an die erste Einheit oder eine erste Ersatzvorrichtung zu übertragen. Beispielweise kann so ein Zurücksetzen oder ein Wiederherstellen eines Systemzustands nach einer Störung erreicht werden. Ferner kann eine schnelle Konfiguration eines Ersatzgeräts implementiert werden, indem eine Konfiguration der zunächst angeschlossenen ersten Einheit an dieses übertragen wird. Das Diagnosemodul kann demnach als "Diagnose- und Sicherungsmodul" ausgebildet sein.

Bei einer Ausbildung umfasst das Verbindungselement einen elektrischen Steckverbinder.

Beispielsweise kann das Verbindungselement ein Kabel mit zwei Steckverbindern umfassen. Mittels dieser Steckverbinder kann die Verbindung zwischen der ersten und der zweiten Einheit herstellbar sein.

Ein elektrischer Steckverbinder kann auf verschiedene Weisen ausgebildet sein und ist nicht auf Verbinder beschränkt, die durch reines Stecken verbunden werden können. Vielmehr können auch andere Verbinder umfasst sein, bei denen eingangsseitige Kontakte zumindest teilweise durch einen Steckvorgang mit einem komplementären Stecker verbindbar sind. Ein solcher Steckverbinder ist etwa zum Verbinden von Kabeln und weiteren Einrichtungen geeignet. Er ist dazu bevorzugt mit eingangs- und ausgangsseitigen Kontakten versehen.

Bei einer weiteren Ausbildung ist das Diagnosemodul von dem elektrischen Steckverbinder umfasst. Es kann beispielsweise in den Steckverbinder integriert sein, etwa in ein Gehäuse des Steckverbinders.

Das Diagnosemodul kann sich vorzugsweise in einem Steckverbinder befinden, der an die erste Einheit angeschlossen ist, von der die zu speichernden Daten bereitgestellt werden. Ferner kann sich das Diagnosemodul in einem Steckverbinder des anderen Kabelendes befinden, auf der Seite der zweiten Einheit.

Ferner kann vorgesehen sein, dass das Diagnosemodul zwischen den Enden des Kabels beziehungsweise den dort angeordneten Steckverbindern angeordnet ist.

Das Diagnosemodul des Verbindungselements, also beispielsweise integriert mit einem Kabel oder einem Steckverbinder, kann andere Einheiten ersetzen, die mit ähnlicher Diagnosefunktionalität ausgestattet und in die erste oder zweite Einheit integriert oder anderweitig extern angeordnet sind.

Bei einer Weiterbildung umfasst das Diagnosemodul ferner einen Sensor, durch den Verbindungs-Betriebsdaten des Verbindungselements erfassbar sind.

Das Diagnosemodul kann in diesem Fall dazu eingerichtet sein, Daten mittels des Sensors zu erfassen, zu empfangen sowie zu speichern beziehungsweise über die Ausleseschnittstelle bereitzustellen, welche die zweite Einheit und/oder die Verbindung zwischen der ersten und zweiten Einheit betreffen. Insbesondere können die Daten eine Verbindungsqualität für das Verbindungselement betreffen, etwa eine Rate oder ein Volumen einer Datenübertragung, eine übertragene elektrische Leistung oder andere Parameter beim Betrieb der Verbindung zwischen der ersten und der zweiten Einheit. Weitere Parameter, deren Wert mittels des Sensors erfassbar sein kann, sind etwa Spannung, Strom und/oder Widerstand, elektrische oder magnetische Feldstärke sowie Temperatur, Feuchtigkeit oder Druck in einer Umgebung des Verbindungselements oder beim Verbindungselement selbst. Dadurch kann etwa eine Überhitzung oder Überlastung des Verbindungselements erfasst werden.

Die Einheit der Erfindung umfasst ein Verbindungselement gemäß der vorliegenden Beschreibung, wobei das Verbindungselement unmittelbar mit der Einheit verbunden ist.

Es kann sich beispielsweise um eine elektronische Einheit oder eine elektrische Einheit mit einer elektronischen Steuereinheit handeln. Insbesondere kann ein Feldgerät, ein Aktor oder ein Sensor vorgesehen sein. Bei einer unmittelbaren Verbindung zwischen der Einheit und dem Verbindungselement ist insbesondere kein lösbares Zwischenelement vorgesehen, also kein Verlängerungskabel oder ähnliches.

Dabei kann das Verbindungselement fest mit der Einheit verbunden sein. In einem solchen Fall ist insbesondere kein Steckverbinder vorgesehen, um das Verbindungselement an die Einheit anzuschließen.

Das System der Erfindung umfasst eine erste Einheit und eine zweite Einheit. Dabei sind die erste und die zweite Einheit mittels eines Verbindungselements gemäß der vorliegenden Beschreibung verbunden.

Bei dem Verfahren zum Herstellen einer kabelgebundenen Verbindung zwischen einer ersten Einheit und einer zweiten Einheit mittels eines Verbindungselements mit einem Diagnosemodul empfängt das Diagnosemodul über eine kabelgebundene datentechnische Verbindung Daten von der ersten Einheit. Es speichert die von der ersten Einheit empfangenen Daten und hält die gespeicherten Daten über eine kabellose datentechnische Verbindung auslesbar bereit.

Das Verfahren ist insbesondere dazu ausgebildet, das Verbindungselement beziehungsweise eine Einheit und ein System mit dem Verbindungselement zu betreiben. Es weist daher dieselben Vorteile auf wie das Verbindungselement gemäß der vorliegenden Beschreibung.

Bei einem weiteren Verfahren zum Ausgeben von Geräteparametern eines Verbindungselements gemäß der vorliegenden Beschreibung wurden zur Laufzeit der ersten Einheit Daten in dem Speichermodul gespeichert und die erste Einheit weist dann einen Defekt auf, bei dem die erste Einheit nicht über kabelgebundene Wege kommunizieren kann. Insbesondere ist die erste Einheit in diesem Zustand an keiner Spannungsversorgung angeschlossen. Es wird nun ein Schritt ausgeführt, bei dem die Daten aus dem Speichermodul über die Ausleseschnittstelle des Verbindungselements ausgelesen werden.

Bei einer Weiterbildung des Verfahrens erfolgt das Ausgeben der Daten aus dem Speichermodul über die Ausleseschnittstelle kabellos, insbesondere mittels RFID oder NFC.

Bei einer weiteren Ausbildung erfolgt zudem eine Ausgabe beziehungsweise ein Anzeigen der ausgelesenen Daten auf einem mobilen Endgerät.

Zudem kann bei einer Weiterbildung des Verfahrens in einem weiteren Schritt eine Interpretation der ausgelesenen Daten anhand einer vorgegebenen Auswertungszuordnung erfolgen. Dies kann beispielsweise bei einem Mobilgerät erfolgen, mittels welchem zuvor das Auslesen erfolgt ist; die Auswertung kann jedoch auch von einer weiteren Einheit vorgenommen werden. Insbesondere wird dabei ein Parameter ausgewertet beziehungsweise ausgegeben, der vor dem Defekt der ersten Einheit zu einer Erhöhung einer Ausfallwahrscheinlichkeit geführt hat.

Nachfolgend wird die Erfindung anhand der anliegenden Zeichnungen näher erläutert. Es zeigen:
- **Figur 1**: ein erstes Ausführungsbeispiel einer Einheit mit dem Verbindungselement;
- **Figur 2**: ein zweites Ausführungsbeispiel einer Einheit mit dem Verbindungselement; und
- **Figur 3**: ein Ausführungsbeispiel des Verfahrens zum Herstellen einer kabelgebundenen Verbindung zwischen einer ersten Einheit und einer zweiten Einheit.

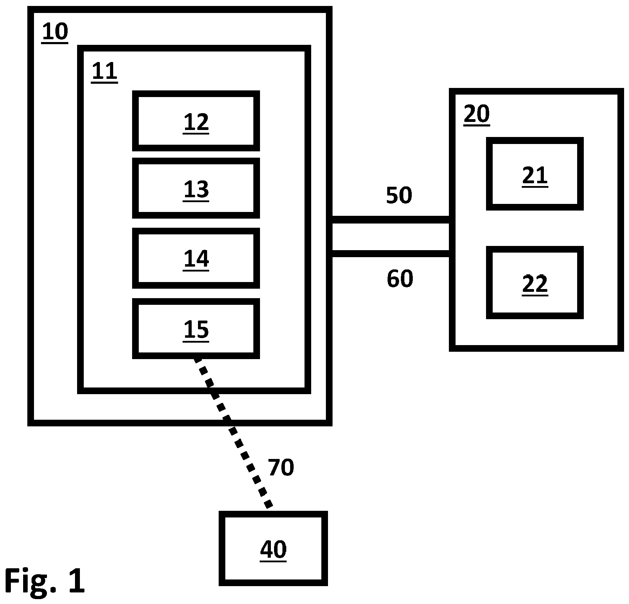

Mit Bezug zu **Figur 1** wird ein erstes Ausführungsbeispiel einer Einheit mit dem Verbindungselement erläutert.

Eine erste Einheit 20 umfasst eine elektronische Steuereinheit 21.

Die erste Einheit 20 umfasst ferner ein Speichermodul 22.

Das Speichermodul 22 der ersten Einheit 20 ist bei diesem Beispiel dazu eingerichtet, unter anderem Konfigurationsdaten für die erste Einheit 20 zu speichern.

Mit der ersten Einheit 20 sind elektrisch leitfähige Kabel 50, 60 verbunden, nämlich Datenleitungen 50 und Stromversorgungsleitungen 60.

Bei dem Ausführungsbeispiel sind diese Kabel 50, 60 fest mit der ersten Einheit 20 verbunden. Bei weiteren Ausführungsbeispielen kann vorgesehen sein, dass eines oder mehrere der Kabel 50, 60 lösbar mit der ersten Einheit 20 verbunden sind, etwa mittels eines Steckverbinders.

An dem der ersten Einheit 20 abgewandten Ende der Leitungen 50, 60 ist ein Steckverbinder 10 angeordnet. Dieser ist auf an sich bekannte Weise so ausgebildet, dass er mit einem komplementären Steckverbinder einer zweiten Einheit (nicht dargestellt) verbunden werden kann; auf diese Weise kann eine elektrische Verbindung zur Leistungsübertragung mittels der Stromversorgungsleitungen 60 beziehungsweise eine datentechnische Verbindung mittels der Datenleitungen 50 hergestellt werden.

Der Steckverbinder 10 umfasst ein Diagnosemodul 11.

Bei verschiedenen weiteren Ausführungsbeispielen können an beiden Enden der Leitungen 50, 60 jeweils Steckverbinder angeordnet sein; in diesem Fall kann das Diagnosemodul 11 in einen dieser Steckverbinder integriert sein.

Das Diagnosemodul 11 umfasst eine Empfangsschnittstelle 12, ein Datenverarbeitungsmodul 13, ein Speichermodul 14 und eine Ausleseschnittstelle 15.

Die Empfangsschnittstelle 12 ist so ausgebildet, dass über eine kabelgebundene datentechnische Verbindung, insbesondere mittels einer Datenleitung 50, zu der ersten Einheit 20 herstellbar ist.

Die Ausleseschnittstelle 15 ist so ausgebildet, dass eine kabellose Verbindung 70 zu einem externen Auslesegerät 40 herstellbar ist. Das externe Auslesegerät 40 kann beispielsweise als mobiles Endgerät ausgebildet sein, etwa als Mobiltelefon oder tragbarer Computer.

Die kabellose Verbindung 70 ist bei dem Beispiel auf an sich bekannte Weise als Nahfeld-Kommunikationsverbindung ausgebildet, etwa mittels RFID oder NFC.

Die Verbindung 70 ist bei dem Beispiel zudem dazu geeignet, eine Übertragung von Daten zu erlauben, insbesondere von der Ausleseschnittstelle 15 zum Auslesegerät 40.

Ferner ist es bei dem Beispiel möglich, das Diagnosemodul 11 durch das Auslesegerät 40 von außen mit elektrischer Energie zu versorgen, insbesondere auf induktive Weise durch ein elektrisches und/oder magnetisches Wechselfeld. Hierdurch kann ein passives Ausgeben von Daten ermöglicht werden, bei dem keine eigene Energieversorgung des Diagnosemoduls 11 notwendig ist.

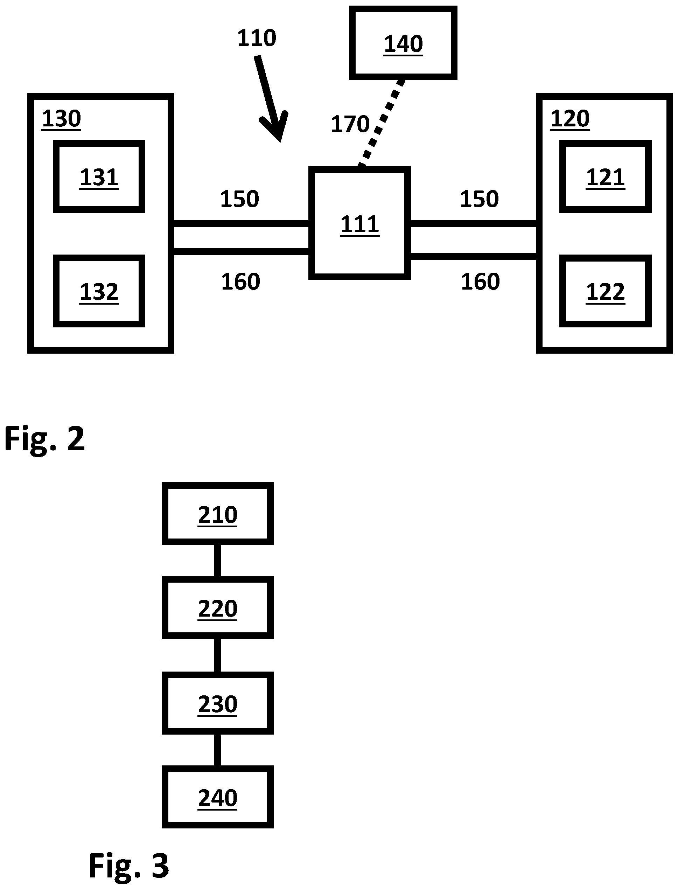

Mit Bezug zu Figur 2 wird ein zweites Ausführungsbeispiel einer Einheit mit dem Verbindungselement erläutert. Der Aufbau der ersten Einheit 120, des Diagnosemoduls 111 und des externen Auslesegeräts 140 ähneln den entsprechenden Einheiten 20, 11, 40 des oben mit Bezug zu Figur 1 erläuterten Ausführungsbeispiels. Die folgenden Erläuterungen sind daher kurz gehalten.

Die erste Einheit 120 umfasst bei dem Beispiel eine elektronische Steuereinheit 121 und ein Speichermodul 122. Analog dazu umfasst die zweite Einheit 130 ebenfalls eine elektronische Steuereinheit 131 und ein Speichermodul 132.

Bei dem hier gezeigten Ausführungsbeispiel umfasst das Verbindungselement 110 Leitungen 150, 160 zum Herstellen einer Verbindung zwischen der ersten 120 und zweiten Einheit 130 zum Übertragen von Daten und elektrischer Energie. Es umfasst ferner ein Diagnosemodul 111.

Das Verbindungselement 110 verbindet bei diesem Ausführungsbeispiel die erste 120 und zweite Einheit 130 direkt in einer Punkt-zu-Punkt-Verbindung.

Die Verbindung zwischen dem Verbindungselement 110 und der ersten 120 beziehungsweise zweiten Einheit 130 wird auf an sich bekannte Weise hergestellt, etwa mittels Steckverbindern an den Enden der Leitungen 150, 160.

Im Unterschied zu dem ersten Ausführungsbeispiel, wie es in Figur 1 gezeigt ist, ist das Diagnosemodul 111 bei dem zweiten Ausführungsbeispiel nicht in einen Steckverbinder an einem Ende der Leitungen 150, 160 des Verbindungselements 110 integriert, sondern als Zwischeneinheit an zumindest einer der Leitungen 150, 160 angeordnet.

Das Diagnosemodul 111 umfasst auch hier, analog zum oben erläuterten ersten Ausführungsbeispiel, eine Empfangsschnittstelle, ein Datenverarbeitungsmodul, ein Speichermodul und ein Auslesemodul (nicht gezeigt).

Es ist eine kabellose datentechnische Verbindung 170 herstellbar von dem Diagnosemodul 111 zu einem externen Auslesegerät 140. Diese Verbindung ist insbesondere mittels einer Nahfeld-Kommunikationstechnik herstellbar, etwa RFID/NFC.

Mit Bezug zu **Figur 3** wird ein Ausführungsbeispiel des Verfahrens zum Herstellen einer kabelgebundenen Verbindung zwischen einer ersten Einheit und einer zweiten Einheit erläutert. Dabei soll von den oben mit Bezug zu den Figur 1 und 2 erläuterten Ausführungsbeispielen ausgegangen werden. Für entsprechende Elemente und Module werden daher die Bezugszeichen der Figuren 1 und 2 angegeben.

In einem ersten Schritt 210 empfängt das Diagnosemodul 11, 111 Daten von der ersten Einheit 20, 120. Die dazu notwendige datentechnische Verbindung ist kabelgebunden und wird über die Datenleitung 50, 150 hergestellt. Ferner erfolgt bei dem Ausführungsbeispiel eine Versorgung des Diagnosemoduls 11, 111 mit einer Betriebsspannung über die Stromversorgungsleitung 60, 160.

Die Daten werden im Schritt 210 über die Empfangsschnittstelle 12 des Diagnosemoduls 11, 111 empfangen und in einem weiteren, optionalen Schritt 220 mittels des Datenverarbeitungsmoduls 13 verarbeitet.

Je nach dem Kontext des Betriebs des Verbindungselements 10, 110 werden die empfangenen Daten bei der Datenverarbeitung gefiltert, konvertiert, komprimiert und/oder entschlüsselt beziehungsweise verschlüsselt.

Die Daten werden - gegebenenfalls nach der Datenverarbeitung im Schritt 220 - in einem Schritt 230 durch das Speichermodul 14 gespeichert und vorgehalten.

Auch bei dem Speichervorgang kann eine Verschlüsselung der Daten erfolgen.

Die gespeicherten Daten können in einem weiteren Schritt 240 über die

Ausleseschnittstelle 15 ausgelesen werden, insbesondere über eine kabellose datentechnische Verbindung. Beispielweise kann hierzu eine Datenübertragung mittels RFID oder NFC erfolgen.

Zum Auslesen von Daten über die Ausleseschnittstelle 15 wird beispielsweise das externe Auslesegerät 40, 140 genutzt. Es wird eine datentechnische Verbindung zwischen der Ausleseschnittstelle 15 des Diagnosemoduls 11, 111 hergestellt und die Daten werden übertragen.

Der Auslesevorgang kann zum Beispiel lediglich von dem Auslesegerät 40, 140 gesteuert wird. Dieses kann dabei ferner kabellos die seitens des Diagnosemoduls 11, 111 zum Ausgeben der Daten benötigte Energie übertragen, etwa induktiv, wie dies zum Beispiel bei RFID-Tags bekannt ist.

Ferner kann der Auslesevorgang so erfolgen, dass das Diagnosemodul 11, 111 auf ein Auslesesignal hin aktiv bestimmte Daten bereitstellt und beispielsweise über eine Antenne der Ausleseschnittstelle 15 sendet. Dabei können die bereitgestellten Daten in Abhängigkeit von dem Auslesesignal gebildet und beispielsweise gefiltert werden.

Die Daten können dann von dem Auslesegerät 40, 140 empfangen und ausgewertet und/oder ausgegeben werden.

Bei einem weiteren Ausführungsbeispiel werden die Daten verschlüsselt übertragen und bei dem Auslesegerät 40, 140 entschlüsselt.

Bei einem weiteren Ausführungsbeispiel wird in einem anschließenden Schritt bei dem Auslesegerät 40 eine Auswertung der von dem Diagnosemodul 11, 111 erfassten Daten ausgeführt. Insbesondere wird eine Ursache für einen Ausfall oder eine Beschädigung der ersten Einheit 20, 120 bestimmt. Zum Beispiel wird dabei ein Wert eines Parameters, der von den übertragenen Daten umfasst ist, mit einem Schwellenwert verglichen und beim Überschreiten beziehungsweise Unterschreiten wird ein Hinweis auf den Parameter beziehungsweise der Wert des Parameters ausgegeben.

Bei einem weiteren Ausführungsbeispiel des Verfahrens werden zur Laufzeit der ersten Einheit 20, 120 Daten in dem Speichermodul 14 des Diagnosemoduls 11, 111 gespeichert. Wenn die erste Einheit 20, 120 später einen Defekt aufweist, bei dem sie nicht mehr über kabelgebundene Wege kommunizieren kann und ihre Spannungsversorgung unterbrochen ist, so können die Daten aus dem Speichermodul 14 ausgelesen werden.

Bei einem weiteren Ausführungsbeispiel ist ferner vorgesehen, dass das Diagnosemodul 11, 111 als "Diagnose- und Sicherungsmodul" ausgebildet ist. Dabei erfasst das Diagnosemodul 11, 111 zur Laufzeit der ersten Einheit 20, 120 Konfigurationsdaten und speichert diese auf dem Speichermodul 14. Nach einem Ausfall der ersten Einheit 20, 120 oder wenn diese aus einem anderen Grund ausgetauscht wird, dann können die gespeicherten Diagnosedaten zur schnellen Wiederherstellung genutzt werden.

Bei einem entsprechenden Verfahren werden Konfigurationsdaten der ersten Einheit 20, 120 von dem Diagnosemodul 11, 111 empfangen und gespeichert. Auf ein Wiederherstellungssignal hin werden dann die gespeicherten Konfigurationsdaten wieder zurück an die erste Einheit 20, 120 oder eine andere, ersatzweise angeschlossene Einheit übertragen. Die Übertragung und Rückübertragung kann dabei kabelgebunden erfolgen, etwa über die gleiche datentechnische Verbindung, über die auch die weiteren Daten übertragen werden, etwa Betriebs- und Diagnosedaten. Es können auch andere Verbindungen genutzt werden, etwa eine parallele kabelgebundene Verbindung oder eine kabellose Verbindung.

### Bezugszeichenliste

- 10: Verbindungselement; Steckverbinder
- 11: Diagnosemodul
- 12: Empfangsschnittstelle
- 13: Datenverarbeitungsmodul
- 14: Speichermodul
- 15: Ausleseschnittstelle
- 20: erste Einheit
- 40: Auslesegerät
- 50: Kabel; Datenleitung
- 60: Kabel; Spannungsversorgungsleitung
- 70: kabellose Verbindung
- 110: Verbindungselement; Zwischeneinheit
- 111: Diagnosemodul
- 120: erste Einheit
- 130: zweite Einheit
- 140: Auslesegerät
- 150: Kabel; Datenleitung
- 160: Kabel; Spannungsversorgungsleitung
- 170: kabellose Verbindung
- 210: Schritt
- 220: Schritt
- 230: Schritt
- 240: Schritt

## Patentansprüche

1. Verbindungselement (10, 110) zum Herstellen einer kabelgebundenen Verbindung zwischen einer ersten Einheit (20, 120) und einer zweiten Einheit (130); umfassend
ein Diagnosemodul (11, 111); wobei das Diagnosemodul (11, 111) umfasst:
eine Empfangsschnittstelle (12), die zum Empfangen von Daten von der ersten Einheit (20, 120) über eine kabelgebundene datentechnische Verbindung eingerichtet ist;
ein Speichermodul (14), das zum Speichern der von der ersten Einheit (20, 120) empfangenen Daten eingerichtet ist; und
eine Ausleseschnittstelle (15), die zum Ausgeben der von dem Speichermodul (14) gespeicherten Daten über eine kabellose datentechnische Verbindung (70, 170) eingerichtet ist.

2. Verbindungselement (10, 110) gemäß Anspruch 1,
**dadurch gekennzeichnet, dass**
das Verbindungselement (10, 110) dazu eingerichtet ist, eine datentechnische Verbindung und/oder eine Verbindung zur Übertragung elektrischer Energie zwischen der ersten Einheit (20, 120) und der zweiten Einheit (130) herzustellen.

3. Verbindungselement (10, 110) gemäß einem der vorhergehenden Ansprüche,
**dadurch gekennzeichnet, dass**
die von der ersten Einheit empfangenen (20, 120) Daten Betriebsdaten und/oder Diagnosedaten umfassen; und/oder
die von der ersten Einheit empfangenen (20, 120) Daten Konfigurationsdaten für die erste Einheit (20, 120) umfassen, wobei, optional, das Verbindungselement (10, 110) dazu eingerichtet ist, auf ein Wiederherstellungssignal hin die Konfigurationsdaten an die erste Einheit (20, 120) oder eine erste Ersatzvorrichtung zu übertragen.

4. Verbindungselement (10, 110) gemäß einem der vorhergehenden Ansprüche,
**dadurch gekennzeichnet, dass**
das Verbindungselement (10, 110) einen elektrischen Steckverbinder umfasst.

5. Verbindungselement (10, 110) gemäß Anspruch 5,
**dadurch gekennzeichnet, dass**
das Diagnosemodul (11, 111) von dem elektrischen Steckverbinder umfasst ist.

6. Einheit mit einem Verbindungselement (10, 110) gemäß einem der vorhergehenden Ansprüche; wobei das Verbindungselement (10, 110) unmittelbar mit der ersten Einheit (20, 120) verbunden ist.

7. Einheit gemäß Anspruch 7,
**dadurch gekennzeichnet, dass**
das Verbindungselement (10, 110) fest mit der ersten Einheit (20, 120) verbunden ist.

8. System, umfassend eine erste Einheit (20, 120) und eine zweite Einheit (130), wobei die erste Einheit (20, 120) und die zweite Einheit (130) mittels eines Verbindungselements (10, 110) gemäß einem der Ansprüche 1 bis 6 verbunden sind.

9. Verfahren zum Herstellen einer kabelgebundenen Verbindung zwischen einer ersten Einheit (20, 120) und einer zweiten Einheit (130) mittels eines Verbindungselements (10, 110) mit einem Diagnosemodul (11, 111), wobei das Diagnosemodul (11, 111):
über eine kabelgebundene datentechnische Verbindung Daten von der ersten Einheit (20, 120) empfängt;
die von der ersten Einheit (20, 120) empfangenen Daten speichert; und
die gespeicherten Daten über eine kabellose datentechnische Verbindung (70, 170) auslesbar bereithält.

10. Verfahren zum Ausgeben von Geräteparametern eines Verbindungselements (10, 110) gemäß einem der Ansprüche 1 bis 6, wobei
zur Laufzeit der ersten Einheit (20, 120) Daten in dem Speichermodul (14) gespeichert wurden;
die erste Einheit (20, 120) dann einen Defekt aufweist, bei dem die erste Einheit (20, 120) nicht über kabelgebundene Wege kommunizieren kann und/oder bei dem die erste Einheit (20, 120) an keiner Spannungsversorgung angeschlossen ist;
weiter umfassend den Schritt:
- Ausgeben der Daten aus dem Speichermodul (14) über die Ausleseschnittstelle (15) des Verbindungselements (10, 110).
